# EUROPEAN PATENT APPLICATION

(11) **EP 4 681 586 A1**
(43) Date of publication of application: **21.01.2026**
(21) Application number: 25187258.6
(22) Date of filing: 03.07.2025
(51) Int. Cl.: A47J 43/27

(54) **DEVICE AND METHOD FOR PREPARING SPARKLING COCKTAILS**

(30) Priority: 18.07.2024 IT 202400016639
(71) Applicant: Nocito, Paolo Federico, 20129 Milano (IT)
(72) Inventor: Nocito, Paolo Federico, 20129 Milano (IT)
(74) Representative: Girometti, Emiliano

(57) **Abstract**

Device for preparing sparkling cocktails (1) comprising a main body (2) defining a containment volume consisting of at least a first portion containing an alcoholic liquid substance (3) and a second portion containing a sparkling agent (4), a lid (5) placed to close said containment volume; the main body is in use shakable so as to mix together the alcoholic liquid substance (3) and the sparkling agent (4), and wherein the lid (5) is configured to be subjected to a pushing force (F) as a function of a variation of the internal pressure due to the mixing of the alcoholic liquid substance (3) with the sparkling agent (4).

## Description

The present invention relates to a device and method for preparing sparkling cocktails.

In particular, the present invention relates to a device and method for preparing alcoholic cocktails, preferably based on tequila or other similar liquors, in which carbon dioxide is dissolved. An example of this type of cocktail is called *"tequila bum bum"* in which tequila is mixed with tonic water.

In detail, the present invention falls within the context of containers of miscible liquids for the preparation of sparkling drinks.

The principle underlying these devices is the mixing of two substances, at least one of which is liquid, enclosed in the same container. At least one of the two substances contains dissolved carbon dioxide, which is released in the form of bubbles when the pressure is reduced.

In the case of cocktail preparation, there exist closed containers, such as shot glasses, that contain two or more alcoholic liquids. These containers have the characteristic of being single-serve, therefore they contain the quantity needed for a single consumption.

By agitating the container, the liquids are mixed, so as to complete the preparation of the drink. These products are designed to be convenient and easy to use, especially for those who want to prepare a cocktail quickly with no need for equipment or additional ingredients. Disadvantageously, these systems do not make it possible to check, unless the container is first opened, whether the cocktail is ready to be served.

Especially in the case of sparkling drinks or cocktails, which are required to be shaken in order to move the particles and make the mixture sparkling, the containers of this type do not allow the user to check the effervescence of the drink.

The technical task of the present invention is therefore to make available a device and a method for preparing sparkling cocktails that can overcome the drawbacks of the prior art.

The object of the present invention is therefore to make available a device and method for preparing sparkling cocktails that allow to create a single-serve sparkling drink in a single container.

The specified technical task and objects are substantially achieved by a device and a method for preparing sparkling cocktails comprising the technical characteristics set forth in one or more of the appended claims. The dependent claims correspond to possible embodiments of the invention.

Further characteristics and advantages of the present invention will become clearer from the indicative and therefore non-limiting description of an embodiment of a device and method for preparing sparkling cocktails.

This description will be set forth herein below with reference to the accompanying drawings, provided for indicative and therefore non-limiting purposes, wherein:
- Figure 1 shows a perspective view of the device according to the present invention;
- Figure 2 shows a side elevation and longitudinal section view of the device of Figure 1;
- Figure 3 shows the device of Figure 2 in a respective operating condition following the mixing of substances contained in the device.

With reference to the attached figures, a device for preparing sparkling cocktails has been globally indicated with 1 and, for ease of description, will be referred to hereinafter as device 1.

The device 1 comprises a main body 2 and a lid 5.

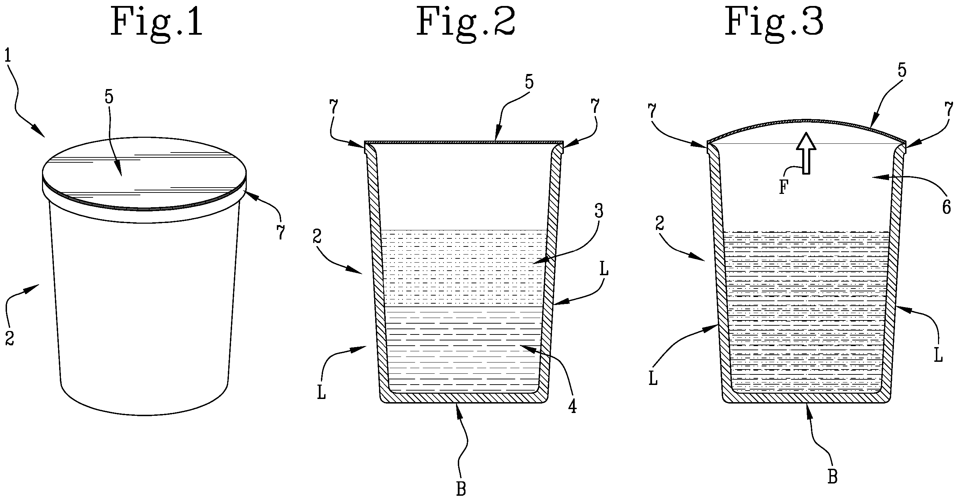

The main body 2 defines a containment volume consisting of two portions, a first portion containing an alcoholic liquid substance 3 and a second portion containing a sparkling agent 4. This configuration of the main body 2, shown in Figure 2, identifies an initial condition of the device 1 itself in which the sparkling cocktail is not yet ready.

According to a possible embodiment of the present invention, in case of *tequila bum bum* preparation, the alcoholic liquid substance 3 is tequila and the sparkling agent 4 is tonic water.

Still according to a possible embodiment of the invention, the main body 2 has a cylindrical or truncated-cone (or frustoconical) shape and comprises a base surface "B" and a side surface "L".

This side surface develops away from the base surface and defines an upper opening of the main body 2 developing on the side opposite the base surface.

According to one embodiment, moreover, this device has the shape of a shot glass and the upper opening defines a rim 7 for the consumption of the prepared sparkling cocktail (Figure 1 and Figure 2).

The lid 5 is placed to close the containment volume. In other words, the lid 5 is placed to cover the upper opening so as to limit the containment volume.

According to one possible embodiment, the lid 5 has a mechanical-type system of coupling to the rim 7.

According to a further embodiment, the lid 5 has an adhesive-type system of coupling to the rim 7.

The system for coupling the lid 5 to the rim 7 is adapted to keep the containment volume closed and to remove the lid 5 by being pulled by the user.

In use, the device 1 can be shaken or agitated manually by the user, so as to mix together the two substances contained therein, i.e. the liquid alcoholic substance 3 and the sparkling agent 4.

This mixing causes the internal pressure force to increase due to the agitation of the drink particles. In fact, agitation causes the release of carbon dioxide dissolved in the liquid, resulting in the formation of gas bubbles. These bubbles increase the pressure within the containment volume.

Therefore, the lid 5 is configured to be subjected to a pushing force "F" generated following the variation of the internal pressure and directed from the containment volume towards the outside of the body 2. As specified above, the pressure variation is achieved after mixing the two substances, i.e. the alcoholic liquid substance 3 and the sparkling agent 4.

According to a possible embodiment of the invention, the lid 5 of the device 1 is made of a flexible material that promotes the deformation following the increase in the internal pressure.

For example, the construction material is a film deformable following the action of a pushing force "F" to which it is subjected.

Alternatively, the film can be a deformable transparent film.

Alternatively, the film can be made from aluminium foil.

Other embodiments related to the material from which the lid 5 is made are possible, as long as the material is preferably a deformable material.

This pushing force "F", specifically, is generated by the change in the pressure inside the device 1, which varies between a rest pressure in which the molecules are not agitated and a second reaction pressure in which the molecules are agitated.

The reaction pressure is greater than the rest pressure.

This pressure variation causes a deformation of the lid 5 between a first configuration and a second configuration.

Note that the pushing force "F" adapted to deform the lid 5 is not, however, capable of disanchoring the lid from the rim of the side surface. In other words, despite the overpressure condition that generates the force "F" inside the body 2, the lid 5 still remains anchored to the body.

In the first configuration, the lid 5 has a planar development. In other words, the lid 5 lies on a transverse plane of the main body 2 parallel to the base surface of the main body 2. In this configuration, the lid 5 therefore lies at the upper opening of the main body 2.

The second configuration, on the other hand, corresponds to a rounded shape of the lid 5.

In other words, as is best shown in Figure 3, this rounded shape of the profile of the lid 5 defines an outward-facing rounded shape of the main body 2, i.e. of the containment volume in the initial configuration of the device 1.

In other words, this rounded shape defines a dome raised above the lying plane of the opening of the main body 2.

In addition, as specified above, the lid 5 is reversibly associated with the main body 2, i.e. it is removable and not fixed following the mixing of the alcoholic liquid substance 3 of the sparkling agent 4. In other words, once the alcoholic liquid substance 3 has been mixed with the sparkling agent 4, it is possible to manually remove the lid 5 from the main body 2, i.e. from the upper opening.

The device 1 further comprises a third portion which defines an empty compartment 6. This space promotes proper mixing of the substances contained in the containment volume and, when the lid 5 is removed, prevents the mixed liquid from easily overflowing.

The present invention also relates to a method having a succession of steps that allow to prepare the cocktail.

Thus, the method for preparing cocktails comprises a step of providing a device 1 as described above, a step of shaking the device 1 so as to mix the alcoholic liquid substance 3 with the sparkling substance 4 and to generate a variation of the internal pressure of the containment volume. The shaking step is implemented manually by the user. The pressure variation thus defines a pushing force "F" directed on the lid 5. Finally, the method provides to remove the lid 5.

In other words, after providing the device 1, the latter is shaken so that the alcoholic liquid substance 3 is mixed with the sparkling substance 4. Mixing, a consequence of the shaking of the device 1, generates an increase in pressure due to the movement of the particles inside the containment volume.

As a result, the increase in pressure generates a pushing force "F" directed from inside the body 2 outwards acting on the lid 5.

In other words, the pushing force "F" generates the deformation of the lid 5, visually indicating whether the cocktail is properly mixed, and thus ready to be consumed.

This effect is visible in Figure 3, which shows the final step of the preparation method with the liquids fully mixed and the pushing pressure acting on the lid 5.

In other words, the step of deforming the lid 5 is formed as a function of a variation between two pressures, the rest pressure and the reaction pressure, greater than the former.

Then, following the deformation of the lid 5, it is possible to manually remove the lid and consume the ready-made cocktail.

Following the removal of the lid 5, the pressure inside the device 1 decreases and carbon dioxide is released in the form of bubbles. The sudden drop in pressure allows the gas contained in the mixed drink to expand rapidly, causing the gas bubbles to escape.

In light of the above, the following invention provides several advantages that allow to overcome the drawbacks of the prior art.

In fact, this device 1 solves the limitation involved in other containers related to the possibility of checking the state of preparation of the sparkling drink.

In fact, the deformable lid 5 makes it possible to provide a visual and obvious indication of the mixing state, without having to remove the covering layer placed on top to close the container.

In addition, the decision to use a single-dose device 1 makes it possible to have easily available a container with the right amount of alcoholic liquid substance 3 and sparkling agent 4.

Therefore, the present invention is capable of overcoming the drawbacks which have emerged from the prior art.

Advantageously, the device and method for preparing sparkling cocktails makes it possible to give quick and reliable indications on the preparation state of the sparkling drink and to easily prepare the desired cocktail.

## Claims

1. Device for preparing sparkling cocktails (1) comprising:
- a main body (2) defining a containment volume consisting of at least a first portion containing an alcoholic liquid substance (3) and a second portion containing a sparkling agent (4);
- a lid (5) placed to close said containment volume;
**characterized in that** said device (1) is in use shakable for mixing together said alcoholic liquid substance (3) and said sparkling agent (4) and **in that** said lid (5) is configured to be subjected to a pushing force (F) from the containment volume outwards, as a function of a variation of the pressure inside said containment volume generated following said mixing of the alcoholic liquid substance (3) with said sparkling agent (4).

2. Device (1) according to claim 1, wherein said lid is made of flexible and deformable material following the variation of the internal pressure.

3. Device (1) according to any one of the preceding claims, wherein said pressure inside the containment volume varies between a rest pressure and a reaction pressure higher than said rest pressure.

4. Device (1) according to any one of the preceding claims, wherein said lid (5) is deformable between a first configuration, in which said lid (5) has a planar development, and a second configuration in which said lid (5) has a rounded shape.

5. Device (1) according to the preceding claim, wherein said rounded shape defines a profile of said lid (5) that is convex outwards with respect to said main body (2).

6. Device (1) according to one or more of the preceding claims, wherein said lid (5) is reversibly associated with said main body (2) to be removable subsequent to the mixing of said alcoholic liquid substance (3) and said sparkling agent (4).

7. Device (1) according to one or more of the preceding claims, wherein said main body (2) has a cylindrical or frustoconical shape comprising a base surface (B) and a side surface (L) developing away from said base surface; said side surface defining an upper opening opposite said base surface.

8. Device (1) according to one or more of the preceding claims, wherein said containment volume further comprises a third portion defining an empty compartment (6).

9. Method for preparing cocktails **characterized by** comprising the steps of:
- providing a device (1) according to one or more of the preceding claims;
- shaking said device (1) so as to mix said alcoholic liquid substance (3) with said sparkling agent (4);
- generating a variation of the internal pressure of said containment volume, said variation of pressure defining a pushing force (F) from said containment volume and directed on the lid (5);
- removing said lid (5).

10. Method for preparing cocktails according to the preceding claim, wherein said pushing force (F) generates the deformation of said lid (5).

11. Method for preparing cocktails according to claim 9 or 10, wherein said deformation step of said lid (5) is carried out as a function of the variation of internal pressure between a rest pressure and a reaction pressure higher than said rest pressure.

12. Method for preparing cocktails according to any one of claims 9 to 11, wherein said step of removing said lid (5) causes a reduction in said internal pressure and subsequently the release of carbon dioxide.
